**Europäisches Patentamt**

(19) **European Patent Office**

**Office européen des brevets**

(11) Publication number : **0 382 856 B1**

(12) # EUROPEAN PATENT SPECIFICATION

(45) Date of publication of patent specification :
**19.11.92 Bulletin 92/47**

(51) Int. Cl.⁵ : **G01D 5/245,** G01D 5/249

(21) Application number : **89908854.6**

(22) Date of filing : **26.07.89**

(86) International application number :
**PCT/JP89/00744**

(87) International publication number :
**WO 90/01680 22.02.90 Gazette 90/05**

(54) **MAGNETIC ABSOLUTE POSITION ENCODER.**

(30) Priority : **29.07.88 JP 190059/88**

(43) Date of publication of application :
**22.08.90 Bulletin 90/34**

(45) Publication of the grant of the patent :
**19.11.92 Bulletin 92/47**

(84) Designated Contracting States :
**DE FR GB**

(56) References cited :
**EP-A- 0 116 118**
**EP-A- 0 218 242**
**DE-A- 3 325 353**
**JP-A- 5 696 213**
**JP-A- 6 182 112**
**JP-A-62 110 113**

(73) Proprietor : **FANUC LTD.**
**3580, Shibokusa Aza-Komanba, Oshino-mura**
**Minamitsuru-gun, Yamanashi 401-05 (JP)**

(72) Inventor : **USHIYAMA, Shigeyuki F. Manshon**
**Harimomi 7-201**
**3539-1, Shibokusa Oshino-mura**
**Minamitsuru-gun Yamanashi 401-05 (JP)**
Inventor : **TANIGUCHI, Mitsuyuki F. Manshon**
**Harimomi**
**8-205, 3511-1, Shibokusa Oshino-mura**
**Minamitsuru-gun Yamanashi 401-05 (JP)**

(74) Representative : **Billington, Lawrence Emlyn et al**
**HASELTINE LAKE & CO Hazlitt House 28**
**Southampton Buildings Chancery Lane**
**London WC2A 1AT (GB)**

## Description

The invention relates to a magnetic-type absolute position encoder and, more particularly, to a magnetic-type absolute position encoder capable of detecting an absolute position. Preferably, but not necessarily, one may detect the position of a rotary shaft of a motor or the like driving a machine tool, etc., within one revolution of the rotary shaft.

Many encoders of optical-type have been proposed as absolute position encoders (for example, see International Application PCT/JP89/00506). An optical absolute position encoder of this kind has a rotary coding disk and a fixed coding disk, with the rotary coding disk being formed so as to obtain sinusoidal and cosinusoidal outputs the numbers of cycles per revolution of which differ from one another in each of a plurality of channels.

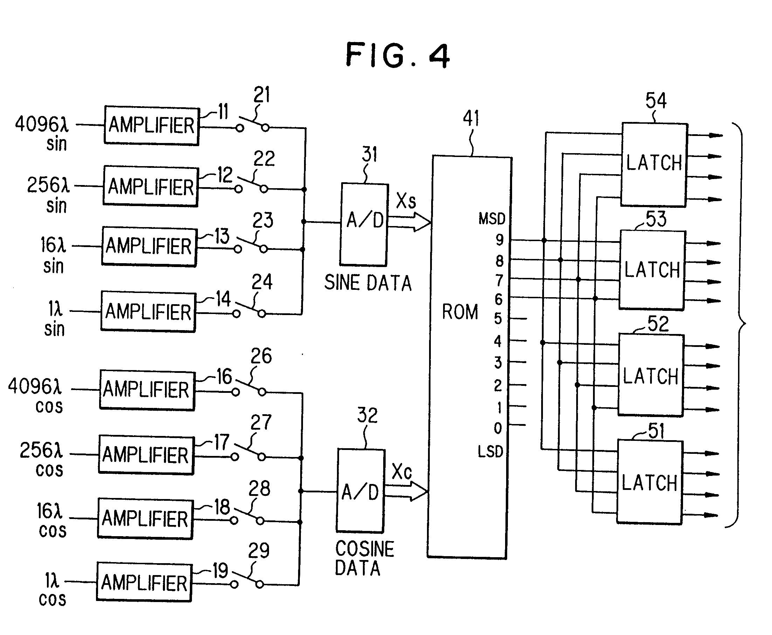

Fig. 4 exemplifies an absolute position encoder adapted to detect the angular information of such a rotary coding disk, in which the rotary disk used is formed to have sinusoidal patterns in such a manner that a plurality of outputs whose numbers of cycles differ are obtained from each channel. Fig. 4 illustrates a case wherein a pattern through which one cycle of a sinusoidal output is obtained per revolution is provided as a first channel, a pattern through which 16 cycles of a sinusoidal output is obtained per revolution is provided as a second channel, a pattern through which 256 cycles of a sinusoidal output is obtained per revolution is provided as a third channel, and a pattern through which 4096 cycles of a sinusoidal output is obtained per revolution is provided as a fourth channel, wherein the inputs are sinusoidal signals $1\lambda\sin$, $16\lambda\sin$, $256\lambda\sin$ and $4096\lambda\sin$ from the respective channels and cosinusoidal signals $1\lambda\cos$, $16\lambda\cos$, $256\lambda\cos$ and $4096\lambda\cos$ having an electrical phase difference of 90° relative to respective ones of the sinusoidal signals. By way of example, the cosinusoidal signals are obtained by using a light-receiving element to detect and photoelectrically convert light which has passed through a stationary slit electrically displaced by 90° from the stationary slit for the sinusoidal signals.

Numerals 11 through 14 denote amplifiers for amplifying respective ones of the sinusoidal signals $1\lambda\sin$ through $4096\lambda\sin$, 21 through 24 analog switches for channel selection connected to the output sides of respective ones of the amplifiers 11 through 14, 16 through 19 amplifiers for amplifying the cosinusoidal signals $1\lambda\cos$ through $4096\lambda\cos$, and 26 through 29 analog switches for channel selection connected to the output sides of respective ones of the amplifiers 16 through 19.

Assume now with regard to detecting information relating to the angle of the rotary coding disk that switches 21 and 26 are turned on. In such case, after the sinusoidal signal $4096\lambda\sin$ and cosinusoidal signal $4096\lambda\cos$ from the signal detectors (the corresponding light-receiving elements) are amplified by the corresponding amplifiers 11, 16, the amplified signals pass through the switches 21, 26 and enter A/D converters 31, 32, respectively. Each of the A/D converters 31, 32 converts its input into digital data of a prescribed number of bits in conformity with the required resolution and supplies this digital data (so-called sine data $X_s$ and cosine data $X_c$) to a ROM 41 as address inputs (e.g., row-and-column address inputs). Values obtained by multiplying $\tan^{-1}(Xs/Xc)$ by a suitable constant are converted into binary numbers stored in the ROM 41 in accordance with designated addresses (an address is designated by the sine data $X_s$ and cosine data $X_c$.

More specifically, assume that the input sinusoidal signal $4096\lambda\sin$ is 0.5 V and that the cosinusoidal signal $4096\lambda\cos$ is also 0.5 V. In such case, these signals are each converted into a prescribed digital quantity, e.g., "0100" by the respective A/D converters 31, 32 (i.e., the sine data $X_s$ and cosine data $X_c$ inputted to the ROM 41 are assumed to be "0100"). Accordingly, if such sine data and cosine data are entered as the address signals, the data in the ROM stored at the corresponding address will be a value (=1/8) converted into a binary number having a suitable number of bits, e.g., a 10-bit binary number "0010000000", the value (1/8) being obtained by multiplying $\tan^{-1}1 = 45°$ by 1/360, which serves as a constant. From among this 10-bit stored data, the four higher-order bits, for example, namely "0010", are read out and latched in a latch circuit 51. In this case, angular information in one wavelength regarding the corresponding channel (i.e., $4096\lambda$) is extracted as interpolated data divided into 16 parts.

Next, the channel selection switches are changed over from 21, 26 to 22, 27, the sinusoidal signal $256\lambda\sin$ and cosinusoidal signal $256\lambda\cos$ which enter at this time are similarly converted into digital data by the A/D converters 31, 32, the sine data and cosine data thus obtained are used as address signals for the ROM 41 to again read out 10-bit data corresponding to the address in the manner set forth above, and the data consisting of the four higher-order bits is latched in a latch circuit 52.

Thereafter, and in similar fashion, the channel selection switches are successively changed over to 23, 28 and then to 24, 29, the sine data and cosine data obtained by A/D-converting the entering signals $16\sin$, $16\lambda\cos$ and then $1\lambda\sin$, $1\lambda\cos$ are successively used as address signals of the ROM 41 to read out the ROM data corresponding to these addresses, and the four higher-order bits of the read data are successively latched in latch circuits 53, 54.

Thus, the channels (four channels in this case) are successively changed over, and ROM data read out

2

EP 0 382 856 B1

using the two-phase input signals (the sinusoidal and cosinusoidal signals) of each channel as prescribed address data is successively latched in the latch circuits. By combining the data in the latch circuits, information indicative of the angle of the rotary coding disk can be detected by 16-bit data extending from the data (the data on the higher-order bit side) latched in the latch circuit 54 to the data (the data on the lower-order bit side) latched in the latch circuit 51. In this case, the absolute position of the disk can be detected, with the number of divisions per revolution being $2^{16}$ (i.e., a resolution of $2^{16}$/revolution).

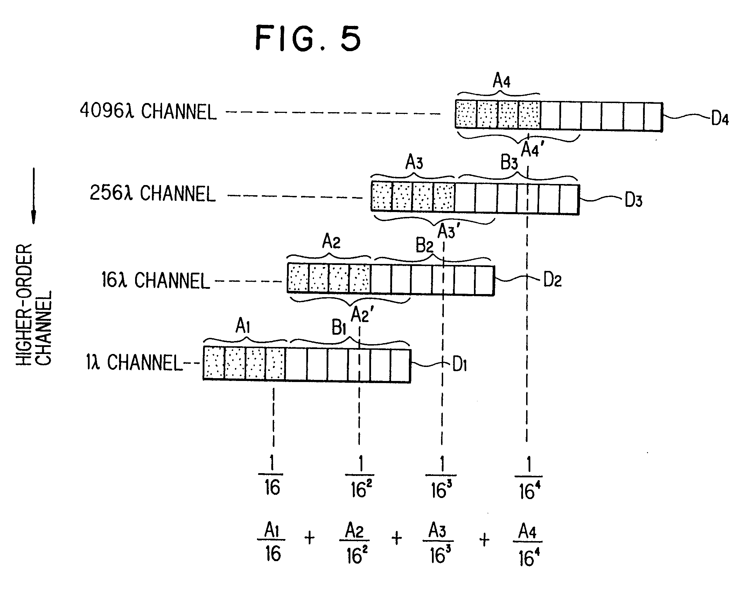

Fig. 5 is a view for describing the absolute position data obtained by the foregoing operation. Let $A_4$ represent a hexadecimal numeric value of the four higher-order bits of interpolated data $D_4$ in the least significant channel (4096λ channel), $A_3$ a hexadecimal numeric value of the four higher-order bits of interpolated data $D_3$ in the 256λ channel, $A_2$ a hexadecimal numeric value of the four higher-order bits of interpolated data $D_2$ in the 16λ channel, and $A_1$ a hexadecimal numeric value of interpolated data $D_1$ in the most significant channel (1λ channel). In such case, the absolute position data is as follows, expressed in hexadecimal notation:

$$A_1 \cdot 16^{-1} + A_2 \cdot 16^{-2} + A_3 \cdot 16^{-3} + A_4 \cdot 16^{-4}$$

It should be noted that if a hexadecimal numeric value $A_i$ (i = 1 - 4) is expressed as follows using binary notation:

$$A_i = a_{i3} \cdot 2^3 + a_{i2} \cdot 2^2 + a_{i1} \cdot 2^1 + a_{i0}$$

then the absolute position data may be written as follows:

$$a_{13} \cdot 2^{-1} + a_{12} \cdot 2^{-2} + a_{11} \cdot 2^{-3} + a_{10} \cdot 2^{-4} +$$

$$a_{23} \cdot 2^{-5} + a_{22} \cdot 2^{-6} + a_{21} \cdot 2^{-7} + a_{20} \cdot 2^{-8} +$$

$$\cdots\cdots\cdots\cdots\cdots\cdots\cdots\cdots +$$

$$a_{43} \cdot 2^{-13} + a_{42} \cdot 2^{-14} + a_{41} \cdot 2^{-15} + a_{40} \cdot 2^{-16}$$

A magnetic-type absolute position encoder has not been successfully employed in the prior art, although has been proposed in for example US-A-4589038 or EP-A-0218242. The reason will now be explained. Fig. 6 is a diagram showing the construction of a magnetic rotation sensor (MR sensor), in which numeral 61 denotes a magnetic drum. The drum is provided with a magnetic material 62 forming a number of small poles. Numeral 63 denotes a magnetic reluctance element disposed in close proximity to the magnetic drum 61 to sense the magnetic flux of the magnetic material 62.

The magnetic drum 61 consists of a non-magnetic cylinder with a diameter of 50 mm having a magnetic paint baked onto its side face, and the magnetic paint is magnetized to have a number of poles having a pitch of amount 120 μm. The magnetic reluctance element 63 comprises a magnetic reluctance element main body consisting of a permalloy thin-film pattern formed on glass, and a wiring pattern for forming a magnetic circuit. The shape and dimensions of the pattern on the main body correspond to the magnetization pattern on the drum. Thus an output signal in accordance with the amount of rotation of the drum can be obtained.

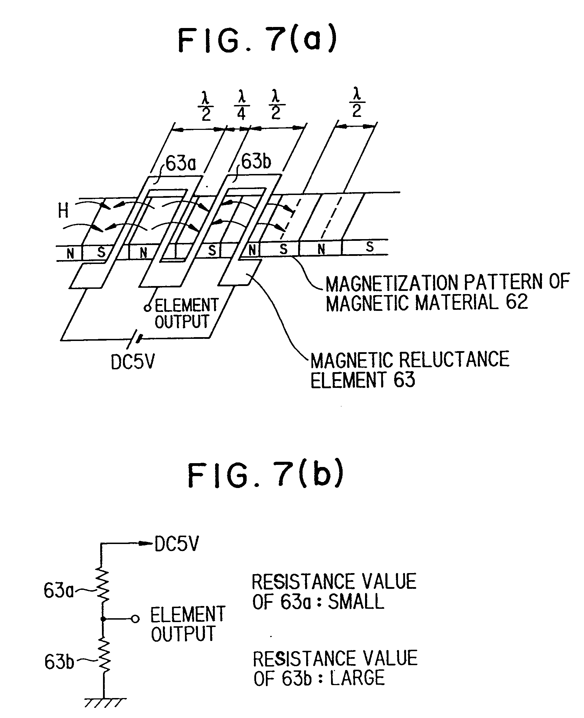

The operating principle of the magnetic rotation sensor will be described with reference to Fig. 7. The characteristic of the magnetic reluctance element 63 is such that an electrical resistance value R, which prevails when a current is passed through the pattern in the longitudinal direction thereof, decreases when a magnetic field H orthogonal to the pattern is present. Accordingly, when the pattern of the magnetic reluctance element 63 is disposed to correspond to the magnetization pattern of the drum, or in other words, when magnetic reluctance elements 63a, 63b are disposed so as to be out of phase by λ/4 (where λ is the magnetized pattern pitch), as shown in Fig. 7(a), the resistance values of the magnetic reluctance elements 63a, 63b become smaller in alternating fashion in accordance with the movement of the magnetization pattern. In the state shown in Fig. 7(a), the resistance value of the magnetic reluctance element 63a becomes smaller and that of the magnetic reluctance element 63b becomes larger. As a result, in accordance with the rotation of the drum (the movement of the magnetized patterns), a sinusoidal signal output can be obtained from an output terminal shown in Fig. 7(b).

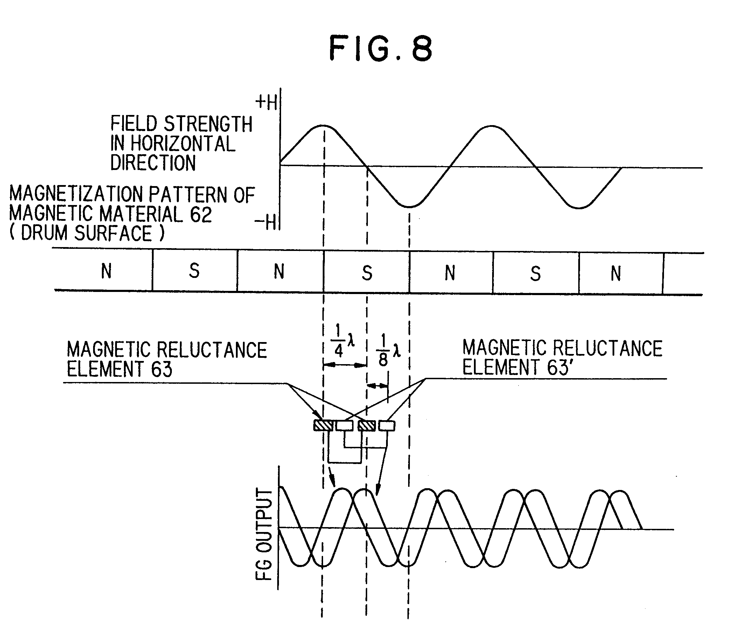

In actuality, as shown in Fig. 8, second magnetic reluctance elements 63', 63' are arranged at positions offset by λ/8 from respective ones of two first magnetic reluctance elements 63, 63 disposed so as to be out of phase by λ/4, and these elements are connected into a bridge-like configuration, whereby the necessary sinusoidal and cosinusoidal outputs are obtained.

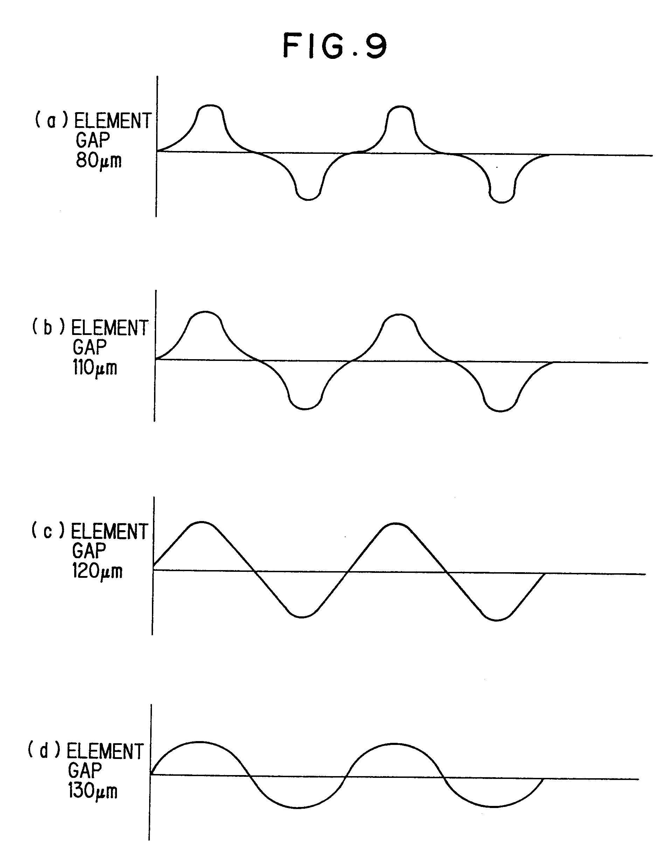

In the above-described magnetic rotation sensor, the magnetization pitch of the magnetic material 62 and the gap between the magnetic material and the magnetic reluctance element have a close correlation, as shown in Fig. 9. The Figure illustrates the influence of this gap upon a magnetization pitch of 120 μm. More specifically, the smaller the gap with respect to the magnetization pitch, the greater the distortion in the output obtained from the sensor. The larger the gap with respect to the magnetization pitch, the smaller the output amplitude.

3

When the gap is equal to the magnetization pitch, the sinusoidal and cosinusoidal outputs obtained have the maximum amplitude and are free of distortion. Accordingly, in a case where an absolute position encoder is fabricated using a magnetic rotation sensor, and if it is attempted to obtain outputs of one-cycle, 16-cycle, 256-cycle and 4096-cycle sinusoidal and cosinusoidal signals employed in the conventional optical absolute position encoder, the difference in the magnetization pitch of each channel will be too large and the gap possessed by the magnetic reluctance element 63 (or 63') must be provided with a step. Thus, problems arise in terms of construction. In addition, an arrangement in which sinusoidal and cosinusoidal signals having a low number of cycles (e.g., one cycle) per revolution are generated magnetically is impossible to realize, and a magnetic-type absolute position encoder having a simple structure cannot be obtained.

According to the present invention there is provided a magnetic-type absolute position encoder in which a magnetic member comprising a magnetized magnetic material is moved relative to a sensor and absolute position within one interval of movement is calculated based on sinusoidal and cosinusoidal signals obtained, characterised in that:

the magnetic member is provided with a magnetic material in m channels each having a different magnetization pitch, there are provided first magnetic reluctance elements, for each of the channels, for extracting the sinusoidal signals, and second magnetic reluctance elements, for each of the channels, for extracting the cosinusoidal signals having a 90° phase difference with respect to the sinusoidal signals obtained from the first magnetic reluctance elements, and each of the channels is magnetized in such a manner that sinusoidal and cosinusoidal signals having P cycles per interval of movement are obtained from a first channel, sinusoidal and cosinusoidal signals having (P-1) cycles per interval of movement are obtained from a second channel, sinusoidal and cosinusoidal signals having (P-n) cycles per interval of movement are obtained from a third channel,..., and sinusoidal and cosinusoidal signals having $(P-n^{m-2})$ cycles per interval of movement are obtained from an m-th channel, and in that said encoder has:

means for calculating a phase-difference signal $\theta_i$ (= 1, 2, 3, ..., m) in each channel from the sinusoidal and cosinusoidal signals outputted by the first and second magnetic reluctance elements of each channel;

means for calculating phase-difference signals $\beta 2$ (= $\theta_1 - \theta_2$), $\beta 3$ (= $\theta_1 - \theta_3$), ... by substracting phases $\theta_2$, $\theta_3$ of other channels from phase $\theta_1$ of the first channel; and

means for calculating absolute position within one interval of movement using the phase-difference signals $\theta_1$ (= $\beta_1$), $\beta_2$, $\beta_3$, ...

Preferred embodiments of the present invention may provide magnetic-type absolute position encoders in which the magnetic reluctance elements of each channel can be constructed with a uniform gap and the absolute position of the moving body can be detected with excellent precision.

In a preferred embodiment of the present invention, a magnetic drum is so magnetized as to obtain sinusoidal and cosinusoidal signals having 4096 cycles per revolution from a first channel, sinusoidal and cosinusoidal signals having $(4096-16^0)$ cycles per revolution from a second channel, sinusoidal and cosinusoidal signals having $(4096-16^1)$ cycles per revolution from a third channel, and sinusoidal and cosinusoidal signals having $(4096-16^2)$ cycles per revolution from a fourth channel. A phase $\theta_i$ (i = 1, 2, 3, 4) is calculated for every channel using the sinusoidal and cosinusoidal signals of each channel, the phases $\theta_2$, $\theta_3$, $\theta_4$ of other channels are subtracted from the phase $\theta_1$ of the first channel to generate phase signals $\beta_2$, $\beta_3$, $\beta_4$ having one cycle, 16 cycles and 246 cycles, respectively, per revolution, and absolute value is detected by obtaining the phase signals $\theta_1$, $\beta_2$, $\beta_3$, $\beta_4$ having 4096 cycles, 256 cycles, 16 cycles and 1 cycle per revolution in a manner similar to that of the optical absolute position encoder. Since there is no large difference in the magnetization pitch of each channel, sinusoidal and cosinusoidal waves of large amplitude and little distortion are obtained from each channel even if the gap between the magnetic reluctance element and the magnetized surface is made the same in each channel. This makes accurate detection of position possible.

## Brief Description of the Drawings

Figs. 1(a), (b) are views showing the construction of a magnetic-type absolute position encoder illustrating an embodiment of the present invention;

Figs. 2(a), (b) are circuit diagrams showing an example of element array and connection;

Fig. 3 is a block diagram of a magnetic-type absolute position encoder according to the present invention;

Fig. 4 is a circuit block diagram of an optical absolute position encoder;

Fig. 5 is a view for describing absolute position data;

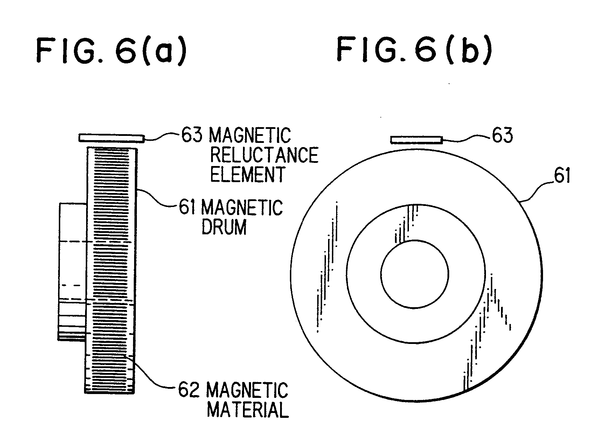

Figs. 6(a), (b) are a front view and side view showing a magnetic rotation sensor (MR sensor);

Figs. 7(a), (b) are views for describing the operating principle of a magnetic rotation sensor;

Fig. 8 is a view for describing the arrangement pattern of first and second magnetic reluctance elements; and

Figs. 9(a) - (d) are waveform characteristic diagrams showing the relationship between magnetization pitch and gap.

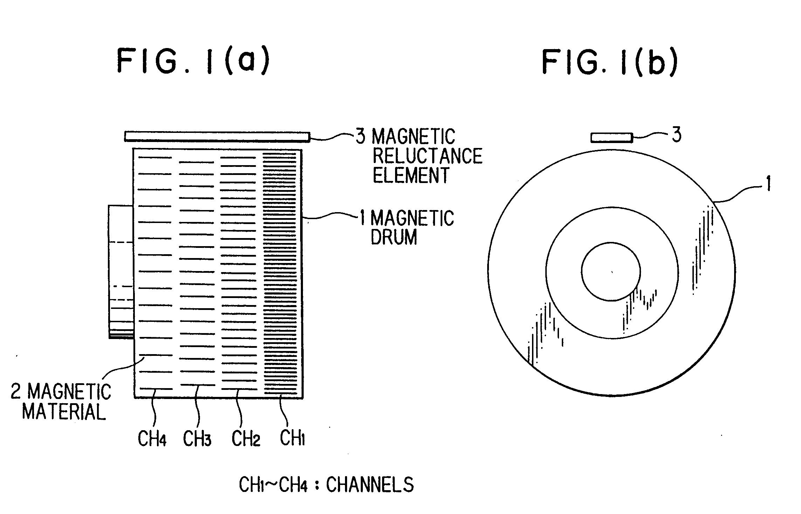

Figs. 1(a), (b) are views showing the construction of a magnetic-type absolute position encoder illustrating an embodiment of the present invention.

Numeral 1 denotes a magnetic drum, 2 a magnetic material magnetized on the magnetic drum, $CH_1$ - $CH_4$ channels having magnetization pitches that differ from one another, and 3 a magnetic reluctance element.

The magnetic drum 1 is provided with the magnetic material 2 in m (= 4) channels each having a different magnetization pitch. Magnetization is such that sinusoidal and cosinusoidal signals having P cycles per revolution are obtained from the first channel $CH_1$, sinusoidal and cosinusoidal signals having P-1 (= P - n°) cycles per revolution are obtained from the second channel $CH_2$, sinusoidal and cosinusoidal signals having P-n (= P - n¹) cycles per revolution are obtained from the third channel $CH_3$, and sinusoidal and cosinusoidal signals having $P-n^{m-2}$ (= P - n²) cycles per revolution are obtained from the fourth channel $CH_4$. Further, in the present embodiment, it is assumed that P = 4096, n = 16, m = 4 and $n^{m-2} = 16^2 = 256$, and the first through fourth channels $CH_1$ - $CH_4$ provided are magnetized at the following pitches in order to obtain the foregoing signals: 360°/4096 per revolution, 360°/(4096-1) (=360°/4095) per revolution, 360°/(4096-16) (=360°/4080) per revolution, and 360°/(4096-256) (=360°/3840) per revolution, respectively.

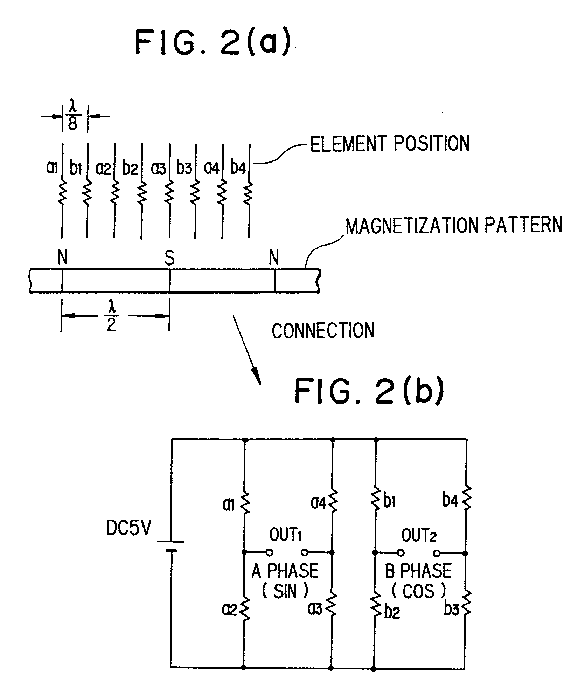

The magnetic reluctance element 3 has first magnetic reluctance elements, one for each of the channels CH1 - CH4, for extracting the sinusoidal signals, and second magnetic reluctance elements, one for each of the channels $CH_1$ - $CH_4$, for extracting the cosinusoidal signals having a 90° phase difference with respect to the sinusoidal signals obtained from the first magnetic reluctance elements. In actuality, as shown in Fig. 2(a), four first and four second magnetic reluctance elements ($a_1$ - $a_4$, $b_1$ - $b_4$) are arranged at a spacing of λ/8 for a total of eight elements for every channel, the elements are connected into a bridge circuit, as shown in Fig. 2(b), and it is so arranged that a sinusoidal signal is outputted at an output terminal $OUT_1$ and a cosinusoidal signal at an output terminal $OUT_2$.

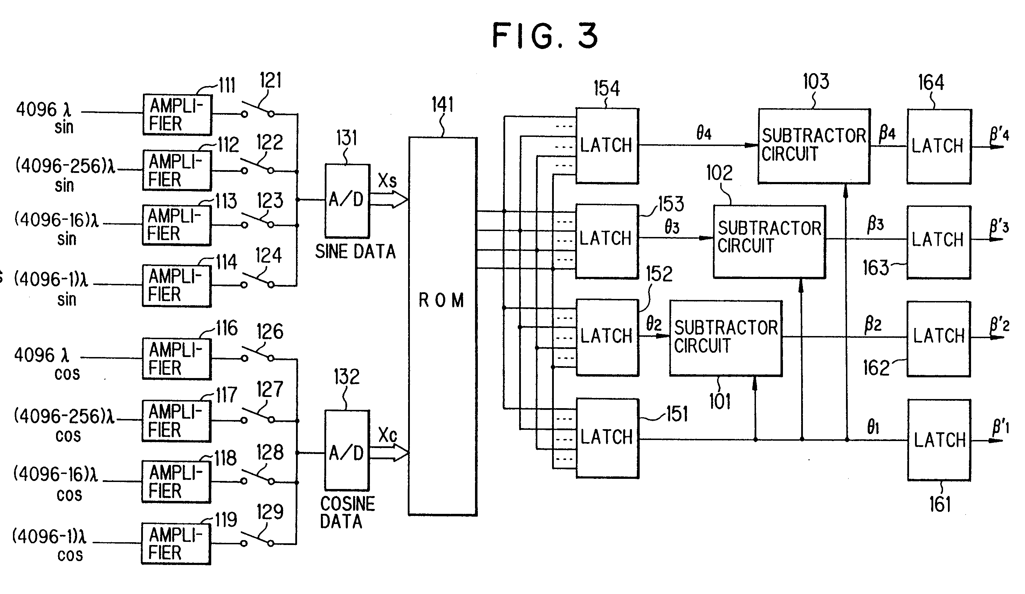

Fig. 3 is a block diagram of a magnetic-type absolute position encoder according to the present invention.

Fig. 3 illustrates a case in which the first channel $CH_1$ through fourth channel $CH_4$ are provided, and in which the inputs from these channels are sinusoidal signals 4096λsin having 4096 cycles per revolution, (4096-1)λsin having (4096-1) cycles per revolution, (4096-16)λsin having (4096-16) cycles per revolution and (4096-256)λsin having (4096-256) cycles per revolution, as well as cosinusoidal signals 4096λcos, (4096-1)λcos, (4096-16)λcos and (4096-256)λcos having an electric phase difference of 90° relative to respective ones of the abovementioned sinusoidal signals.

Numerals 111 through 114 denote amplifiers for amplifying respective ones of the sinusoidal signals 4096λsin through (4096λsin), 121 through 124 analog switches for channel selection connected to the output sides of respective ones of the amplifiers 111 through 114, 116 through 119 amplifiers for amplifying the cosinusoidal signals 4096λcos through (4096-1)λcos, and 126 through 129 analog switches for channel selection connected to the output sides of respective ones of the amplifiers 116 through 119.

Assume now with regard to detecting information relating to the angle of the magnetic drum 1 that switches 121 and 126 are turned on. In such case, after the sinusoidal signal 4096λsin and cosinusoidal signal 4096λcos from the magnetic reluctance element 3 are amplified by the corresponding amplifiers 111, 116, the amplified signals pass through the switches 121, 126 and enter A/D converters 131, 132, respectively. Each of the A/D converters 131, 132 converts its input into digital data of a prescribed number of bits in conformity with the required resolution and supplies this digital data (so-called sine data $X_s$ and cosine data $X_c$) to a ROM 141 as address inputs, e.g., row-and-column address inputs. Values obtained by multiplying $tan^{-1}(X_s/X_c)$ by a suitable constant are converted into binary numbers stored in the ROM 141 at addresses designated by the sine data $X_s$ and cosine data $X_c$, as in the case of Fig. 4. Accordingly, when an address is entered, a prescribed binary number is read out of the ROM 141 and stored in a latch circuit 151.

For example, assume that the input sinusoidal signal 4096λsin is 0.5 V and that the cosinusoidal signal 4096λcos is also 0.5 V. In such case, these signals are each converted into a prescribed digital quantity, e.g., "0100" by the respective A/D converters 131, 132. That is, the sine data $X_s$ and cosine data $X_c$ inputted to the ROM 141 are both assumed to be "0100". Data, in which a value (= 1/8) obtained by multiplying $tan^{-1}1 = 45°$ by 1/360 is expressed as a 10-bit binary number "0010000000", is stored in the ROM at the address designated by the sine data $X_s$ and cosine data $X_c$. Accordingly, this 10-bit data is read out of the ROM 141 and latched in the latch circuit 151.

Next, the channel selection switches are changed over from 121, 126 to 122, 127, the sinusoidal signal (4096-256)λsin and cosinusoidal signal (4096-256)λcos which enter at this time are similarly converted into digital data by the A/D converters 131, 132, the sine data $X_s$ and cosine data $X_c$ thus obtained are inputted again as address signals for the ROM 141 to read out 10-bit data stored at the address designated as set forth above, and the data is latched in a latch circuit 152.

Thereafter, and in similar fashion, the channel selection switches are successively changed over to 123, 128 and then to 124, 129, the sine data $X_s$ and cosine data $X_c$ obtained by A/D-converting the entering signals (4096-16)sin, (4096-16)$\lambda$cos and then (4096-1)$\lambda$sin, (4096-1)$\lambda$cos are successively inputted to the ROM 141 as address signals to read out 10-bit data stored at the designated addresses, and these items of data are successively latched in latch circuits 153, 154. Thus, items of 10-bit data with regard to the corresponding channels, namely phase data $\theta_1$ - $\theta_4$, are stored in the latch circuits 151 - 154.

The items of phase data $\theta_1$ - $\theta_4$ enter subtractor circuits 101 - 103 so that the phases $\theta_i$ (i = 2, 3, 4) calculated from the sinusoidal signals and cosinusoidal signals of other channels are subtracted from the phase $\theta_1$ calculated from the sinusoidal and cosinusoidal signals outputted from the first and second magnetic reluctance elements of the first channel CH$_1$. Thus, phase data $\beta_2$, $\beta_3$, $\beta_4$ having 256 cycles, 16 cycles and one cycle per revolution is generated. As a result, by adding the 4096-cycle phase data $\theta_1$ (= $\beta_1$) of the first channel to the phase data $\beta_2$, $\beta_3$, $\beta_4$, phase data having one cycle, 16 cycles, 256 cycles and 4096 cycle per revolution may be obtained in a manner similar to that of the optical absolute position encoder.

Four higher-order bits $\beta_1'$ - $\beta_4'$ of each item of phase data are latched by being inputted to latch circuits 161 - 164. It should be noted that the phase data $\beta_1'$ is interpolated data obtained when one wavelength of the 4096$\lambda$ signal is divided into 16 parts, the phase data $\beta_2'$ is interpolated data obtained when one wavelength of the 256$\lambda$ signal is divided into 16 parts, the phase data $\beta_3'$ is interpolated data obtained when one wavelength of the 16$\lambda$ signal is divided into 16 parts, and the phase data $\beta_4'$ is interpolated data obtained when one wavelength of the 1$\lambda$ signal is divided into 16 parts.

Thus, the channels (four channels in this case) are successively changed over, data read out using the two-phase input signals (the sinusoidal and cosinusoidal signals) of each channel as prescribed address data is successively latched in the latch circuits 151 - 154, and the higher-order, four-bit phase-difference signals $\beta_i'$ obtained by subtracting the data in these latch circuits, as well as the higher-order, four-bit phase-difference signal $\beta_1'$ of phase $\theta_1$ (= $\beta_1$) obtained from the first channel, are fed into the angle information calculating circuit of the conventional absolute position encoder, whereby information indicative of the angle of the magnetic drum can be detected. In this case, the absolute position of the disk can be detected with the number of divisions per revolution being $2^{16}$ (i.e., a resolution of $2^{16}$/revolution).

Since the magnetization pitch differs by 6% between the 4096 cycles of the first channel and the (4096 - 256) cycles of the fourth channel, it is desirable to alter the gap by this amount. However, a disparity of this magnitude has no substantial effect, and correct sinusoidal and cosinusoidal signals are obtained from each channel even if magnetic detection is performed with the same gap. Hence, no problems are encountered.

Described in the foregoing is a magnetic-type absolute position encoder which calculates absolute position per revolution using a magnetic drum. However, it is also possible to construct a magnetic-type absolute position encoder in which a linear magnetic member composed of a magnetic material magnetized in linear fashion is moved relative to a sensor and absolute position is calculated, every predetermined linear interval, within the interval on the basis of the sinusoidal and cosinusoidal signals obtained. More specifically, a linear magnetic member is provided with a magnetic material of m channels each having a different magnetization pitch, there are provided magnetic reluctance elements, one for each of the channels, for extracting sinusoidal signals, and second magnetic reluctance elements, one for each of the channels, for extracting cosinusoidal signals having a 90° phase difference with respect to the sinusoidal signals obtained from the first magnetic reluctance elements, magnetization is performed such that sinusoidal and cosinusoidal signals having P cycles per linear interval are obtained from the first channel, sinusoidal and cosinusoidal signals having P-1 cycles per linear interval are obtained from the second channel, sinusoidal and cosinusoidal signals having P-n cycles per linear interval are obtained from the third channel,···, and sinusoidal and cosinusoidal signals having P-n$^{m-2}$ cycles per linear interval are obtained from an m-th channel, phases $\theta_i$ (i = 1, 2, 3, ···, m) in each channel are calculated from the sinusoidal and cosinusoidal signals outputted by the first and second magnetic reluctance elements of each channel, the phases $\theta_2$, $\theta_3$, ··· of the other channels are subtracted from the phase $\theta_1$ of the first channel to calculate phase-difference signals $\beta_2$ (= $\theta_1$ - $\theta_2$), $\beta_3$ (= $\theta_1$ - $\theta_3$), and absolute position within one linear interval is calculated using the phase-difference signals $\theta_1$ (= $\beta_1$), $\beta_2$, $\beta_3$, ···, and so on.

Thus, in accordance with the present invention, it can be arranged so that there is no great difference in the magnetization pitch interval of each channel. As a result, sinusoidal and cosinusoidal waves of large output and little distortion can be obtained even with a structure in which the gap between the magnetic reluctance element and the magnetized surface is made uniform in each channel.

## Claims

1.    A magnetic-type absolute position encoder in which a magnetic member (1) comprising a magnetized magnetic material (2) is moved relative to a sensor (3) and absolute position within one interval of movement is calculated based on sinusoidal and cosinusoidal signals obtained, characterized in that:

the magnetic member (1) is provided with a magnetic material (2) in m channels ($CH_1$ to $CH_4$) each having a different magnetization pitch, there are provided first magnetic reluctance elements, for each of the channels, for extracting the sinusoidal signals, and second magnetic reluctance elements, for each of the channels, for extracting the cosinusoidal signals having a 90° phase difference with respect to the sinusoidal signals obtained from the first magnetic reluctance elements, and each of the channels is magnetized in such a manner that sinusoidal and cosinusoidal signals having P cycles per interval of movement are obtained from a first channel ($CH_1$), sinusoidal and cosinusoidal signals having (P-1) cycles per interval of movement are obtained from a second channel ($CH_2$), sinusoidal and cosinusoidal signals having (P-n) cycles per interval of movement are obtained from a third channel ($CH_3$),···, and sinusoidal and cosinusoidal signals having $(P-n^{m-2})$ cycles per interval of movement are obtained from an m-th channel, and in that said encoder has:

means for calculating a phase-difference signal $\theta_i$ (= 1, 2, 3, ···, m) in each channel from the sinusoidal and cosinusoidal signals outputted by the first and second magnetic reluctance elements of each channel;

means for calculating phase-difference signals $\beta_2$ (= $\theta_1 - \theta_2$), $\beta_3$ (= $\theta_1 - \theta_3$), ··· by subtracting phases $\theta_2$, $\theta_3$ of other channels from phase $\theta_1$ of the first channel ($CH_1$); and

means for calculating absolute position within one interval of movement using the phase-difference signals $\theta_1$ (=$\beta_1$), $\beta_2$, $\beta_3$, ···.

2. A magnetic-type absolute position encoder according to claim 1, characterized in that P = 4096, n = 16 and m = 4, said phase-signal calculating means outputs $\beta_1$ as phase data within one wavelength of 4096 cycles per revolution, $\beta_2$ as phase data within one wavelength of 256 cycles per interval of movement, $\beta_3$ as phase data within one wavelength of 16 cycles per interval of movement and $\beta_4$ as phase data within one wavelength of one cycle per interval of movement, and

said absolute position calculating means calculates absolute position per interval of movement using these phase-difference data.

3. A magnetic-type absolute position encoder according to claim 1 or 2, characterized in that said means for calculating the phase $\theta_i$ of each channel has an A/D converter for outputting, as addresses, digital data $X_s$, $Y_c$ obtained by A/D-converting the sinusoidal and cosinusoidal signals, and a ROM for storing tan-1 $X_s/Y_c$ as the phase $\theta_i$ at an address designated by the addresses $X_s$, $Y_c$.

4. A magnetic-type absolute position encoder according to any preceding claim, wherein the magnetic member (1) is a rotary drum and said interval of movement is a revolution of the drum.

5. A magnetic-type absolute position encoder according to any of claims 1 to 3, wherein the magnetic member (1) is a linear magnetic member on which the magnetic material (2) is magnetised in linear fashion, and its absolute position is calculated as aforesaid within every predetermined linear interval of movement.

## Patentansprüche

1. Magnetische Kodierungsvorrichtung der absoluten Lage, bei der ein magnetisches Mittel (1), das ein magnetisiertes magnetisches Material (2) umfaßt relativ zu einem Sensor (3) bewegt wird und die absolute Lage innerhalb eines Intervalls der Bewegung auf der Grundlage von sinusförmigen und kosinusförmigen Signalen berechnet wird, die gewonnen werden, dadurch **gekennzeichnet,** daß

das magnetische Mittel (1) mit einem magnetischen Material (2) in m Kanälen ($CH_1$ bis $CH_4$) versehen ist die eine unterschiedliche Magnetisierungshöhe aufweisen, wobei erste magnetische Reluktanzelemente für jeden der Kanäle zum Abrufen der sinusförmigen Signale und zweite magnetische Reluktanzelemente für jeden der Kanäle zum Abrufen der kosinusförmigen Signale, die eine 90°-Differenz in bezug auf die sinusförmigen Signale haben, welche von den ersten magnetischen Reluktanzelementen gewonnen werden, vorgesehen sind und wobei jeder der Kanäle in einer derartigen Weise magnetisiert ist daß sinusförmige und kosinusförmige Signale, die P Zyklen je Intervall der Bewegung haben, von einem ersten Kanal ($CH_1$), sinusförmige und kosinusförmige Signale, die (P-1) Zyklen je Intervall der Bewegung haben, von einem zweiten Kanal ($CH_2$), sinusförmige und kosinusförmige Signale, die (P-n) Zyklen je Intervall der Bewegung haben, von einem dritten Kanal ($CH_3$),··· und sinusförmige und kosinusförmige Signale, die (P-n$^{m-2}$) Zyklen je Intervall der Bewegung haben, von einem m-ten Kanal gewonnen werden, und daß die Kodierungsvorrichtung hat:

ein Mittel zum Berechnen eines Phasendifferenz-Signals $\Theta_i$ (= 1, 2, 3,···, m) in jedem Kanal aus den sinusförmigen und kosinusförmigen Signalen, die durch die ersten und zweiten magnetischen Reluktanzelemente jedes Kanals ausgegeben werden,

ein Mittel zum Berechnen von Phasendifferenz-Signalen $\beta_2$ (= $\Theta_1$ - $\Theta_2$), $\beta_3$ (= $\Theta_1$ ··· $\Theta_3$), ··· durch Subtrahieren von Phasen $\Theta_2$, $\Theta_3$ weiterer Kanälen von der Phase $\Theta_1$ des ersten Kanals (CH$_1$) und

ein Mittel zum Berechnen der absoluten Lage innerhalb eines Intervalls der Bewegung unter Benutzung der Phasendifferenz-Signale ($\Theta_1$ (= $\beta_1$ ), $\beta_2$, $\beta_3$,···.

2. Magnetische Kodierungsvorrichtung der absoluten Lage nach Anspruch 1, dadurch **gekennzeichnet**, daß P = 4096, n = 16 und m = 4 ist, Phasensignal-Berechnungsmittel $\beta_1$ als Phasen-Daten innerhalb einer Wellenlänge von 4096 Zyklen je Umdrehung, $\beta_2$ als Phasen-Daten innerhalb einer Wellenlänge von 256 Zyklen je Intervall der Bewegung $\beta_3$ als Phasen-Daten innerhalb einer Wellenlänge von 16 Zyklen je Intervall der Bewegung und $\beta_4$ als Phasen-Daten innerhalb einer Wellenlänge von einem Zyklus je Intervall der Bewegung, ausgibt und

das Absolutlagen-Berechnungsmittel die absolute Lage je Intervall der Bewegung unter Benutzung dieser Phasendifferenz-Daten berechnet.

3. Magnetische Kodierungsvorrichtung der absoluten Lage nach Anspruch 1 oder 2, dadurch **gekennzeichnet**, daß das Mittel zum Berechnen der Phase $\Theta_i$ jedes Kanals hat einen A/D-Wandler zum Ausgeben digitaler Daten $X_s$, $Y_c$, die durch A/D-Wandlung der sinusförmigen und der kosinusförmigen Signale gewonnen werden, als Adressen und einen ROM zum Speichern von tan-1 $X_s/Y_c$ als die Phase $\Theta_i$ unter einer Adresse, die durch die Adressen $X_s$, $Y_c$ bezeichnet ist.

4. Magnetische Kodierungsvorrichtung der absoluten Lage nach einem der vorhergehenden Ansprüche, bei der das magnetische Mittel (1) eine rotierende Trommel und das Intervall der Bewegung eine Umdrehung der Trommel ist.

5. Magnetische Kodierungsvorrichtung der absoluten Lage nach einem der Ansprüche 1 bis 3, bei der das magnetische Mittel (1) ein lineares magnetisches Mittel ist, auf dem das magnetische Material (2) in linearer Weise magnetisiert ist, und dessen absolute Lage wie zuvor angegeben innerhalb jedes vorbestimmten linearen Intervalls der Bewegung berechnet wird.

**Revendications**

1. Un codeur magnétique de position absolue dans lequel un élément magnétique (1) comprenant une matière magnétique magnétisée (2) est déplacé par rapport à un capteur (3) et dans lequel une position absolue à l'intérieur d'un intervalle de mouvement est calculée sur la base de signaux sinusoïdaux et cosinusoïdaux obtenus, caractérisé en ce que :

l'organe magnétique (1) est muni d'une matière magnétique (2) dans m canaux (CH$_1$ à CH$_4$) présentant chacun un pas de magnétisation différent, en ce que sont prévus de premiers éléments à réluctance magnétique, pour chacun des canaux, afin d'extraire les signaux sinusoïdaux, et de seconds éléments à réluctance magnétique, pour chacun des canaux, afin d'extraire les signaux cosinusoïdaux présentant une différence de phase de 90° par rapport aux signaux sinusoïdaux obtenus à partir des premiers éléments à réluctance magnétique, chacun des canaux étant magnétisé de telle manière que des signaux sinusoïdaux et cosinusoïdaux présentant P cycles par intervalle de mouvement soient obtenus à partir d'un premier canal (CH$_1$), que des signaux sinusoïdaux et cosinusoïdaux présentant (P-1) cycles par intervalle de mouvement soient obtenus à partir d'un second canal (CH$_2$), que des signaux sinusoïdaux et cosinusoïdaux présentant (P-n) cycles par intervalle de mouvement soient obtenus à partir d'un troisième canal (CH$_3$),..., et que des signaux sinusoïdaux et cosinusoïdaux présentant (P-n$_{m-2}$) cycles par intervalle de mouvement soient obtenus à partir d'un m$^{ième}$ canal, et en ce que ledit codeur présente :

des moyens pour calculer un signal de différence de phase $\theta_i$ (= 1, 2, 3,..., m) dans chaque canal à partir des signaux sinusoïdaux et cosinusoïdaux sortant des premiers et seconds éléments à réluctance magnétique de chaque canal ;

des moyens pour calculer des signaux de différence de phase $\beta2$ (=$\theta_1$ - $\theta_2$), $\beta3$ (=$\theta_1$ - $\theta_3$), ..., en soustrayant les phases $\theta_2$, $\theta_3$ d'autres canaux de la phase $\theta_1$ du premier canal (CH$_1$) ; et

des moyens pour calculer la position absolue à l'intérieur d'un intervalle de mouvement en utilisant les signaux de différence de phase $\theta_1$ (= β1), β2, β3, ... .

2. Un codeur magnétique de position absolue selon la revendication 1, caractérisé en ce que P = 4096, n = 16 et m = 4, lesdits moyens de calcul des signaux de différence de phase donnent en sortie β1 en tant que donnée de phase à l'intérieur d'une longueur d'onde de 4096 cycles par tour, β2 en tant que donnée de phase à l'intérieur d'une longueur d'onde de 256 cycles par intervalle de mouvement, β3 en tant que donnée de phase à l'intérieur d'une longueur d'onde de 16 cycles par invervalle de mouvement et β4 en tant que donnée de phase à l'intérieur d'une longueur d'onde d'un cycle par intervalle de mouvement, et lesdits moyens de calcul de position absolue calculent la position absolue par intervalle de mouvement en utilisant ces données de différence de phase.

3. Un codeur magnétique de position absolue selon la revendication 1 ou 2, caractérisé en ce que lesdits moyens permettant de calculer la phase $\theta_i$ de chaque canal présente un convertisseur A/N pour donner en sortie, en tant qu'adresses, des données numériques $X_S$, $Y_C$ obtenus par une conversion A/N des signaux sinusoïdaux et cosinusoïdaux, et une ROM pour stocker Arc tg $X_s/X_c$ en tant que la phase $\theta_i$ à une adresse désignée par les adresses $X_S$, $Y_C$.

4. Un codeur magnétique de position absolue selon une revendication précédente quelconque, dans lequel l'élément magnétique (1) est un tambour tournant et ledit intervalle de mouvement est un tour du tambour.

5. Un codeur magnétique de position absolue selon l'une quelconque des revendications 1 à 3, dans lequel l'élément magnétique (1) est un élément magnétique linéaire sur lequel la matière magnétique (2) est magnétisée de façon linéaire, sa position absolue étant calculée comme indiqué ci-dessus à l'intérieur de chaque intervalle de mouvement linéaire prédéterminé.

# FIG. I(a)

3 MAGNETIC RELUCTANCE ELEMENT

1 MAGNETIC DRUM

2 MAGNETIC MATERIAL

CH4 CH3 CH2 CH1

CH1~CH4 : CHANNELS

# FIG. I(b)

3

1

EP 0 382 856 B1

# FIG. 2(a)

$\frac{\lambda}{8}$

ELEMENT POSITION

a1 | b1 | a2 | b2 | a3 | b3 | a4 | b4

MAGNETIZATION PATTERN

N      S      N

$\frac{\lambda}{2}$

CONNECTION

# FIG. 2(b)

DC5V

a1    a4    b1    b4

OUT1      OUT2

A PHASE (SIN)      B PHASE (COS)

a2    a3    b2    b3

11

# FIG. 3

EP 0 382 856 B1

# FIG. 4

EP 0 382 856 B1

# FIG. 5

HIGHER-ORDER CHANNEL

4096λ CHANNEL — — — — — — — $A_4$ — $A_4'$ — $D_4$

256λ CHANNEL — — — — $A_3$ $B_3$ $A_3'$ — $D_3$

16λ CHANNEL — — — $A_2$ $B_2$ $A_2'$ — $D_2$

1λ CHANNEL — — $A_1$ $B_1$ $A_2'$ — $D_1$

$$\frac{1}{16} \qquad \frac{1}{16^2} \qquad \frac{1}{16^3} \qquad \frac{1}{16^4}$$

$$\frac{A_1}{16} + \frac{A_2}{16^2} + \frac{A_3}{16^3} + \frac{A_4}{16^4}$$

EP 0 382 856 B1

# FIG. 6(a)　　FIG. 6(b)

63 MAGNETIC
RELUCTANCE
ELEMENT

61 MAGNETIC
DRUM

62 MAGNETIC
MATERIAL

63

61

# FIG. 7(a)

MAGNETIZATION PATTERN OF
MAGNETIC MATERIAL 62

MAGNETIC RELUCTANCE
ELEMENT 63

# FIG. 7(b)

RESISTANCE VALUE
OF 63a : SMALL

RESISTANCE VALUE
OF 63b : LARGE

# FIG. 8

FIELD STRENGTH IN HORIZONTAL DIRECTION

MAGNETIZATION PATTERN OF MAGNETIC MATERIAL 62 ( DRUM SURFACE )

+H

−H

| N | S | N | S | N | S | N |
|---|---|---|---|---|---|---|

$\frac{1}{4}\lambda$   $\frac{1}{8}\lambda$

MAGNETIC RELUCTANCE ELEMENT 63

MAGNETIC RELUCTANCE ELEMENT 63'

FG OUTPUT

EP 0 382 856 B1

# FIG.9

(a) ELEMENT GAP 80μm

(b) ELEMENT GAP 110μm

(c) ELEMENT GAP 120μm

(d) ELEMENT GAP 130μm